# EUROPEAN PATENT SPECIFICATION

(11) **EP 1 760 351 B1**
(45) Date of publication and mention of the grant of the patent: **15.06.2016**
(21) Application number: 06018113.8
(22) Date of filing: 30.08.2006
(51) Int. Cl.: F16D 65/12

(54) **Disk braking device and motorcycle provided with the disk braking device**
Scheibenbremse und Motorrad mit einem solchen Scheibenbremse
Frein à disque et motocycle avec un tel frein à disque

(30) Priority: 30.08.2005 JP 2005249313
(43) Date of publication of application: 07.03.2007
(73) Proprietor: Yamaha Hatsudoki Kabushiki Kaisha, Shizuoka-ken Shizuoka 438-8501 (JP)
(72) Inventor: Kawai, Hideo, Iwata-shi, Shizuoka-ken 438-8501 (JP); Abe, Manabu, Iwata-shi, Shizuoka-ken 438-8501 (JP); Migita, Itsurou, Iwata-shi, Shizuoka-ken 438-8501 (JP); Ura, Kazuaki, Iwata-shi, Shizuoka-ken 438-8501 (JP); Kurita, Masatoshi, Iwata-shi, Shizuoka-ken 438-8501 (JP); Ikki, Fujio, Iwata-shi, Shizuoka-ken 438-8501 (JP)
(74) Representative: Grünecker Patent- und Rechtsanwälte PartG mbB

(56) References cited:
- EP-A- 0 287 017
- EP-A- 1 548 318
- WO-A-02/46639
- WO-A-2004/042247
- WO-A-2005/040631
- DE-U1- 29 910 528
- JP-A- 2002 227 891
- JP-A- 2004 169 738
- US-A1- 2004 200 674

## Description

The present invention relates to a disk braking device, in which a disk plate fixed to a wheel is interposed by friction members, and a motorcycle provided with the disk braking device.

In, for example, a disk braking device for motorcycles, there are some cases where a multiplicity of holes are formed at circumferential intervals on the disk plate from the viewpoint of achieving lightening of a disk plate fixed to a wheel and recesses are formed at circumferential intervals at an outer edge of the disk plate from the viewpoint of suppressing brake noise at the time of braking (for example, Patent Document 1).

Patent Document 1: PCT WO 2004/042247 A1

By the way, the conventional disk plate adopts a structure, in which holes for lightening are arranged to be made radially parallel. When the holes are arranged to be made parallel, a heat insulation portion is formed in a radial direction, so that there is a fear that the disk plate is impaired in radiation quality and friction members become liable to wear according to circumstances. Said brake disk is pressed by and between friction pads to produce braking force. Outside recess portions are circumferentially arranged on an outer periphery of the brake disk. As a result, a radial width of a braking face that is in contact with the friction pads varies in the circumferential direction.

Prior art document WO 02/46639 A1 discloses a reduced-weight disc brake for motor cycles comprises a braking band in the form of a circular ring which is provided with tabs spaced uniformly on the inner side of the band, for releasable fixing to a support bell, and with a plurality of axial weight-reducing and cooling holes. Said disk is further provided with a plurality of millings produced by a disc-type milling cutter with an axis parallel to the axis of the circular ring and formed alternately in the inner wall and in the peripheral wall of the band, with the dual advantage of further reducing the weight of the band and of forming, with at least some of the plurality of axial holes, ventilation ducts which, together with the increase in the dissipating surface area and with the turbulence induced by the discontinuities of the inner and peripheral walls, also increase cooling efficiency.

The prior art document US 2004/0200674 discloses a disk braking device, according to the preamble of claim 1, having a disk plate, wherein a peripheral edge thereof is provided with notches at predetermined circumferential intervals. Moreover, a plurality of through-holes is arranged on said disk, wherein said through-holes have different configurations. In particular, said prior art document discloses a plurality of circular shape through-holes arranged at radial inner and outer portions of the disk, wherein oval shape through-holes are extending in the middle part of the disk plate between said circular shape holes.

The invention has been thought of in view of the conventional situation and has its object to provide a disk braking device that ensures the radiation quality for a disk plate to enable suppressing abrasion of a friction member, and a motorcycle provided with the disk braking device.

This objective is solved in an inventive manner by a disk braking device having the features of independent claim 1. Preferred embodiments are laid down in the dependent claims.

Accordingly, it is provided a disk braking device, in which a disk plate fixed to a wheel is interposed by friction members, wherein the disk plate comprises a plurality of through-holes, which are respectively arranged such that each through-hole is provided on an individual radial line passing through a center of the disk plate.

Preferably, the through-holes are formed at predetermined circumferential intervals on concentric circles, which are centered on the center of rotation of the disk plate.

Yet further, preferably the notches are arranged so that any one of the radial lines passes through the notch.

According to a preferred embodiment, the through-holes are arranged so that through-hole connecting lines connecting the adjacent through-holes together are zigzag along a circumferential direction of the disk plate and the notches are formed in a manner to be directed toward those portions of the through-hole connecting lines, which are recessed toward a center thereof, from an outer peripheral edge of the disk plate.

Beneficially, the disk plate is formed to be annular, the plurality of through-holes are arranged so that through-hole connecting lines connecting the adjacent through-holes together are zigzag along a circumferential direction of the disk plate, and the notches are formed in a manner to be directed toward those portions of the through-hole connecting lines, which are convex toward an outer peripheral edge thereof, from an inner peripheral edge of the disk plate.

Yet further, beneficially the disk plate comprises a plurality of through-holes, which are formed at circumferential intervals on a plurality of concentric circles, and a plurality of notches, which are formed at circumferential intervals at an outer peripheral edge thereof, wherein rotational locus regions of the through-holes positioned on the respective concentric circles overlap rotational locus regions of the through-holes positioned on a radially adjacent concentric circle, and wherein rotational locus regions of the through-holes positioned on an outer end concentric circle, which is positioned radially outermost, overlap rotational locus regions of the notches.

According to another preferred embodiment, the disk plate comprises a plurality of through-holes, which are formed at circumferential intervals on a plurality of concentric circles, and a plurality of notches, which are formed at circumferential intervals at an outer peripheral edge thereof, and wherein, when the notches and the through-holes positioned on the respective concentric circles are moved onto a virtual straight line passing through a center of the disk plate and the friction member is moved onto the virtual straight line, the notches and the through-holes form a virtual slit radially crossing a projected plane of the friction member onto the disk plate.

There is further disclosed a motorcycle comprising the disk braking device according to one of the above embodiments.

In the following, the present invention is explained in greater detail with respect to several embodiments thereof in conjunction with the accompanying drawings, wherein:
- Fig. 1: is a side view showing a disk braking device according to an embodiment,
- Fig. 2: is a cross sectional view showing the disk braking device,
- Fig. 3: is a view showing a disk plate of the disk braking device, and
- Fig. 4: is an enlarged view showing an essential part of the disk plate.

### Description of Reference Numerals and Signs:

- 1:: disk braking device
- 2:: front wheel
- 5:: disk plate
- 6:: brake pad
- 16:: friction member
- 20a to 20d:: through-hole
- 20e:: notch
- C1 to C4:: concentric circle
- A:: virtual straight line
- B:: virtual slit
- S1 to S5:: rotational locus region
- S16:: slide locus region
- w:: through-hole connecting line

An embodiment will be described below with reference to the accompanying drawings.

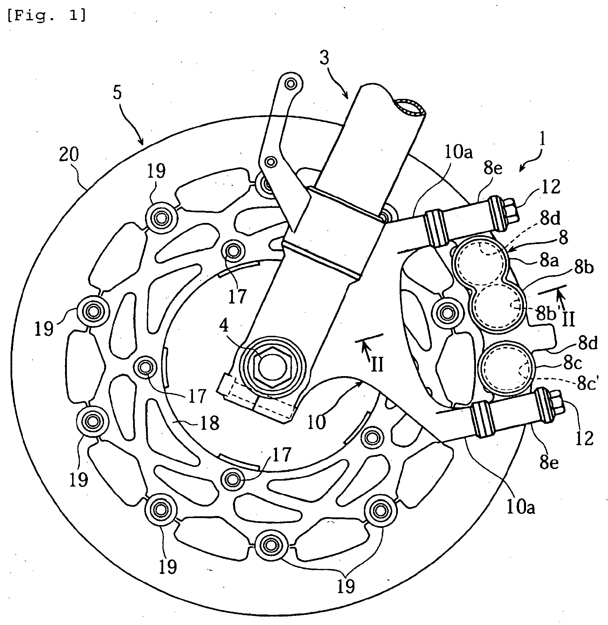

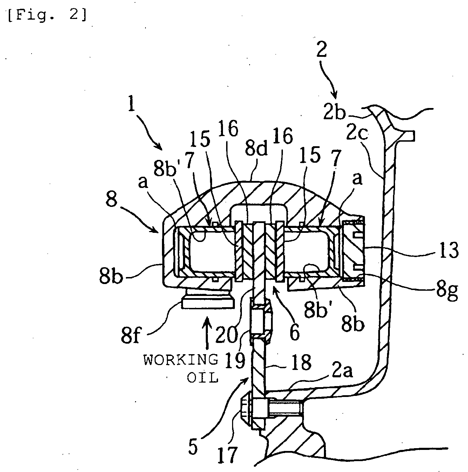

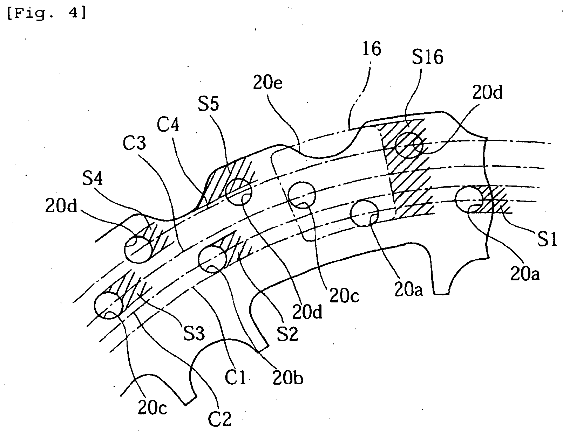

Figs. 1 to 4 are views illustrating a disk braking device according to an embodiment. The embodiment will be described by way of a disk braking device for motorcycles.

In the drawings, the reference numeral 1 denotes a front disk braking device arranged on a front wheel 2 of a motorcycle. The front wheel 2 is journaled by a lower end of a front fork 3. The front fork 3 is supported on a head pipe, which is fixed to a front end of a vehicle body frame (not shown), to be able to be steered left and right, and a steering handle (not shown) is mounted to an upper end of the front fork 3.

The front wheel 2 is constructed such that a hub 2a and a rim 2b with a tire (not shown) mounted thereto are connected to each other by means of a plurality of spokes, and an axle shaft 4 is inserted into the hub 2a with a bearing (not shown) therebetween, the axle shaft 4 being fixed to the front fork 3.

A rearwardly projecting caliper bracket 10 is formed on a lower end of the front fork 3. A pair of upper and lower mounts 10a, 10a projecting radially and rearward are formed integral with the caliper bracket 10.

The disk braking device 1 comprises a disk plate 5 fixed to the hub 2a of the front wheel 2 to rotate with the front wheel 2, a brake pad 6 that generates a frictional force between it and the disk plate 5, a plurality of pistons 7 that bring the brake pad 6 into pressure contact with the disk plate 5, and a caliper body 8 that holds the respective pistons 7.

The caliper body 8 comprises pairs of first, second, and third left and right piston holding portions 8a, 8b, 8c arranged opposingly with the disk plate 5 therebetween and along an outer periphery thereof, a bridge 8d arranged in a manner to straddle an outside of the disk plate 5 and to join the first, second, and third left and right piston holding portions 8a, 8b, 8c together, and mount bosses 8e, 8e formed integral with the first and third piston holding portions 8a, 8c, which are positioned on the both ends.

The upper and lower mount bosses 8e, 8e are clamped and fixed to the respective mounts 10a of the caliper bracket 10 by means of bolts 12, 12 threadedly inserted from radially outward.

The pistons 7 are inserted into and arranged in respective holding holes 8a' to 8c' of the first, second, and third left and right piston holding portions 8a to 8c to be able to advance and retreat. Hydraulic pressure chambers a are defined between the respective pistons 7 and bottoms of the holding holes 8a' to 8c'.

The respective holding holes 8a' to 8c' are formed by forming the left and right holding holes 8b', 8b' at a time by means of machining with a tool, which is inserted from a side wall (inner side wall) of the caliper body 8, inserting the pistons 7, 7 into the respective holding holes 8b' from a work hole 8g formed by the machining, and thereafter oiltightly closing the work hole 8g by a plug material 13. The above is the same with the remaining holding holes 8a', 8c'.

The caliper body 8 is formed with a hydraulic pressure supply port 8f, through which a working oil is supplied to the respective hydraulic pressure chambers a. A master cylinder is connected to the hydraulic pressure supply port 8f through a brake hose (not shown) and a brake lever is connected to the master cylinder. The master cylinder and the brake lever are arranged on the steering handle described above.

The brake pad 6 comprises base plates 15, against which the pistons 7 abut, and friction members 16 supported by the base plates 15 to be able to abut against the disk plate 5.

The disk plate 5 comprises a plate body 18 fixed to an outer side surface of the hub 2a by means of a plurality of bolts 17, and an annular brake disk 20 joined to an outer periphery of the plate body 18 by means of a plurality of rivet type pins 19. The respective friction members 16 are opposed to the brake disk 20 to be able to abut thereagainst.

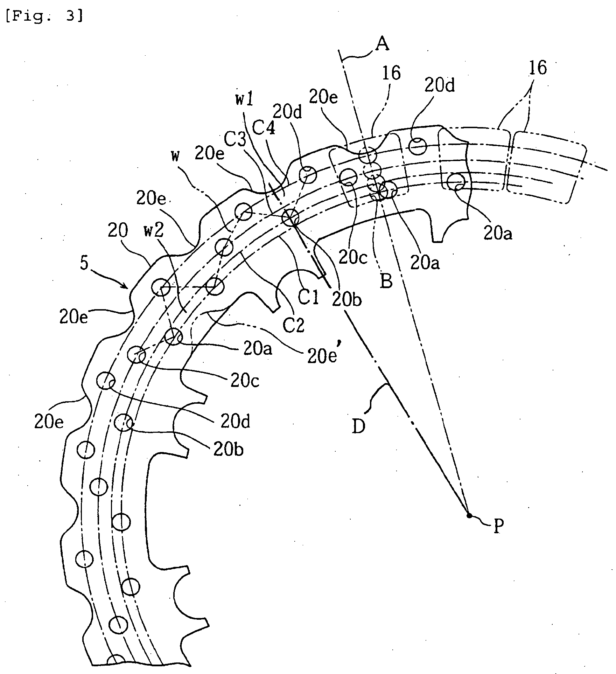

The brake disk 20 is formed with a multiplicity of first to fourth through-holes 20a to 20d as shown in Fig. 3. The first to fourth through-holes 20a to 20d are formed at predetermined circumferential intervals on first to fourth concentric circles C1 to C4, which are centered on a center p of rotation of the disk plate 5 and have different radii. More specifically, the first through-holes 20a, the second through-holes 20b, the third through-holes 20c, and the fourth through-holes 20d, respectively, are formed at predetermined intervals on the first concentric circle C1, the second concentric circle C2, the third concentric circle C3, and the fourth concentric circle (outer end concentric circle) C4.

Arcuate notches 20e directed centrally are formed at predetermined circumferential intervals at an outer peripheral edge of the brake disk 20.

The notches 20e and the first to fourth through-holes 20a to 20d are arranged so that rotational locus regions S1 to S5 of the respective notches 20e and the first to fourth through-holes 20a to 20d formed when the disk plate 5 rotates through one revolution cover a slide locus region S16 of the friction members 16 on the brake disk 20 in all regions.

More specifically, the first to fourth through-holes 20a to 20d and the notches 20e are formed so that the rotational locus regions of the first and second through-holes 20a, 20b, the second and third through-holes 20b, 20c, and the third and fourth through-holes 20c, 20d, which are radially adjacent to each other, overlap mutually and the rotational locus region of the fourth through-holes 20d disposed radially outermost and the rotational locus region of the notches 20e overlap each other. In other words, when the notches 20e and all the first to fourth through-holes 20a to 20d are moved one by one to one virtual straight line A passing through the center p of rotation of the disk plate 5, a virtual slit B is formed to fully cross a projected plane of the friction member 16 onto the brake disk 20 radially. Such virtual slits B are formed in 20 sets each time the disk plate 5 rotates through one revolution.

Only one of the first to fourth through-holes 20a to 20d is formed on one radial line D passing through a center of the brake disk 20. In other words, the respective through-holes 20a to 20d are scattered circumferentially and arranged so as not to overlap one another radially.

The first to fourth through-holes 20a to 20d are arranged so that through-hole connecting lines w connecting the respective circumferentially adjacent through-holes 20a to 20d together are zigzag in a circumferential direction of the brake disk 20.

The respective notches 20e are formed in a manner to be directed toward recessed portions w1 of the through-hole connecting lines w from the outer peripheral edge of the brake disk 20. Also, the notches 20e are arranged so that any one of the radial lines D passes through the notch 20e.

When the brake lever described above is operated, the master cylinder generates a hydraulic pressure and the hydraulic pressure is supplied to the respective hydraulic pressure chambers a through the hydraulic pressure supply port 8f of the caliper body 8. Then the respective pistons 7 advance to bring the friction members 16 into pressure contact with the brake disk 20 of the disk plate 5 to interpose the brake disk 20 therebetween. Thereby, the frictional force brakes the front wheel 2. At this time, the notches 20e and the respective through-holes 20a to 20d pass over the whole slide surfaces of the friction members 16 and attachment such as abrasion powder, etc. on the friction members 16 is removed upon the passage.

According to the teaching of the present embodiment, since only one of the through-holes 20a to 20d is formed on one radial line D of the brake disk 20, the brake disk 20 is formed with a heat conduction path, through which frictional heat generated in through-hole portions of the brake disk 20 is conducted to an outer peripheral edge or an inner peripheral edge thereof. Thereby, it is possible to heighten the disk plate 5 in radiation quality to suppress abrasion of the friction members 16. That is, when through-holes are formed radially outwardly or inwardly of the respective through-holes tentatively, such through-holes interrupt the heat conduction path, so that the disk plate 5 is deteriorated in radiation quality.

Also, since the notches 20e are arranged so that any one of the radial lines D passes through the notch 20e, heat generated in a through-hole portion positioned on the radial line is readily discharged outside from the notch 20e, in which the disk plate 5 is improved in radiation quality.

According to the teaching of the present embodiment, since the first to fourth through-holes 20a to 20d are arranged so that the through-hole connecting lines w connecting the respective through-holes 20a to 20d together are zigzag in the circumferential direction of the brake disk 20 and the respective notches 20e are formed in a manner to be directed toward the recessed portions w1 of the through-hole connecting lines w, the through-holes 20a to 20d and the notches 20e are easy to form when the brake disk 20 is subjected to press molding.

According to the embodiment, since the rotational locus regions S1 to S5 formed when the multiplicity of the first to fourth through-holes 20a to 20d and the notches 20e formed on the brake disk 20 of the disk plate 5 rotate through one revolution cover the slide locus region S16 of the friction members 16 in all the regions, the respective through-holes 20a to 20d and the respective notches 20e pass over the whole slide surfaces of the friction members 16 each time the disk plate 5 rotates through one revolution. Thereby, attachment such as abrasion powder, etc. on the friction members 16 is removed by edges of the respective through-holes 20a to 20d and the respective notches 20e, so that it is possible to suppress local abrasion of the friction members 16, thus enabling an improvement in part service life.

Also, since attachment on the friction members 16 is automatically removed by a frictional force with the disk plate 5 at the time of braking, it is possible to dispense with any manual cleaning work, or to reduce a work frequency.

Also, since the embodiment is constructed so that the respective through-holes 20a to 20d and the notches 20e pass over all the surfaces of the friction members 16, it is possible to heighten the disk plate 5 in lightening and radiation quality and to suppress brake noise.

According to the embodiment, the first to fourth through-holes 20a to 20d are formed at predetermined circumferential intervals on the first to fourth concentric circles C1 to C4, which are centered on the center p of rotation of the disk plate 5 and have different radii, the rotational locus regions of the first to fourth through-holes 20a to 20d overlap the rotational locus regions of the first and second through-holes 20a, 20b, the second and third through-holes 20b, 20c, and the third and fourth through-holes 20c, 20d, which are adjacent to each other, and the rotational locus of the fourth through-holes 20d disposed radially outermost overlaps the rotational locus region of the notches 20e.

In other words, when the notches 20e and the first to fourth through-holes 20a to 20d are moved one by one to one virtual straight line A passing through the center p of rotation of the disk plate 5, a virtual slit B is formed to cross a projected plane of the friction member 16 onto the brake disk 20 radially. Thereby, it is possible to readily realize a construction covering the rotational locus regions S1 to S5 of the notches 20e and the respective through-holes 20a to 20d over the slide locus region S16 of the friction members 16, thus enabling surely removing attachment.

In addition, according to the embodiment, while the notches 20e are formed on the outer peripheral edge of the brake disk 20, notches 20e' according to the invention may be formed at predetermined intervals at an inner peripheral edge of the brake disk 20 as indicated by two-dot chain line in Fig. 3. In this case, it is desired that the respective notches 20e' be formed to be directed toward convex portions w2 of the through-hole connecting lines w.

Also, while the embodiment has been described taking an example of a front disk braking device of a motorcycle, the braking device according to the embodiment is applicable to a disk braking device for a rear wheel and is not limited to motorcycles but applicable to small-sized three-wheelers, four-wheelers, ATV (all-terrain vehicle), etc.

The description above discloses (amongst others) an embodiment of a disk braking device comprising a disk plate fixed to a wheel, and a brake pad having a friction member, which generates a frictional force between it and the disk plate, and wherein the disk plate includes a plurality of through-holes and a plurality of notches formed at a peripheral edge of the disk plate, and the through-holes are formed one on one radial line passing through a center of the disk plate, and the notches are arranged so that any one of the radial lines passes through the notch.

With the disk braking device according to the embodiment, since the through-holes are formed one on one radial line passing through a center of the disk plate, the brake disk is formed with a heat conduction path, through which frictional heat generated in through-hole portions of the plate is conducted to an outer peripheral edge. Thereby, it is possible to heighten the disk plate in radiation quality to suppress abrasion of the friction member. That is, in the case where a plurality of through-holes are formed on the radial line tentatively, a conduction path of heat generated in one through-hole portion is interrupted by other through-holes, so that the disk plate is deteriorated in radiation quality.

Also, since the notches are arranged so that any one of the radial lines passes through the notch, heat generated in through-hole portions formed on the radial line is readily discharged outside from the notch, in which the disk plate is heightened in radiation quality.

The description above further discloses, as a first preferred aspect, a disk braking device comprising a disk plate fixed to a wheel, and a brake pad having a friction member, which generates a frictional force between it and the disk plate, and wherein the disk plate includes a plurality of through-holes and a plurality of notches formed at a peripheral edge of the disk plate, and the through-holes are formed one on one radial line passing through a center of the disk plate, and the notches are arranged so that any one of the radial lines passes through the notch.

Further, according to a preferred second aspect, the plurality of through-holes are arranged so that through-hole connecting lines connecting the adjacent through-holes together are zigzag along a circumferential direction of the disk plate and the notches are formed in a manner to be directed toward those portions of the through-hole connecting lines, which are recessed toward a center thereof, from an outer peripheral edge of the disk plate.

Further, according to a preferred third aspect, the disk plate is formed to be annular, the plurality of through-holes are arranged so that through-hole connecting lines connecting the adjacent through-holes together are zigzag along a circumferential direction of the disk plate, and the notches are formed in a manner to be directed toward those portions of the through-hole connecting lines, which are convex toward an outer peripheral edge thereof, from an inner peripheral edge of the disk plate.

Further, according to a preferred fourth aspect, a rotational locus region formed when the notches and the respective through-holes of the disk plate are caused to rotate through one revolution, covers all regions of a slide locus of the friction member on the disk plate.

Further, according to a preferred fifth aspect, the disk plate comprises a plurality of through-holes formed at circumferential intervals on a plurality of concentric circles and a plurality of notches formed at circumferential intervals at an outer peripheral edge thereof, rotational locus regions of the through-holes positioned on the respective concentric circles overlap rotational locus regions of the through-holes positioned on a radially adjacent concentric circle, and rotational locus regions of the through-holes positioned on an outer end concentric circle, which is positioned radially outermost, overlap rotational locus regions of the notches.

Further, according to a preferred sixth aspect, the disk plate comprises a plurality of through-holes formed at circumferential intervals on a plurality of concentric circles and a plurality of notches formed at circumferential intervals at an outer peripheral edge thereof, and when the notches and the through-holes positioned on the respective concentric circles are moved onto a virtual straight line passing through a center of the disk plate and the friction member is moved onto the virtual straight line, the notches and the through-holes form a virtual slit radially crossing a projected plane of the friction member onto the disk plate.

Further, the description further discloses a motorcycle comprising the disk braking device according to any one of first to sixth aspects.

The description above still further discloses, in order to provide a disk braking device that ensures the radiation quality for a disk plate to enable suppressing abrasion of a friction member, and a motorcycle provided with the disk braking device, an embodiment of a disk plate 5, which comprises a plurality of through-holes 20a to 20d and a plurality of notches 20e formed at peripheral edges thereof, and wherein the respective through-holes 20a to 20d are arranged so that one of the through-holes or less is disposed radially of the disk plate 5.

## Claims

1. Disk braking device, in which a disk plate (5) fixed to a wheel is interposed by friction members, wherein the disk plate (5) comprises a plurality of through-holes (20a to 20d), which are respectively arranged such that each through-hole is provided on an individual radial line (D) passing through a center (P) of the disk plate (5), a peripheral edge of the disk plate (5) is provided with notches (20e) at predetermined circumferential intervals, wherein only one of said through-holes (20a to 20d) is formed on one radial line (D) of the brake disk (20) forming a heat conduction path, through which frictional heat generated in through-hole portions of the brake disk (20) is conducted to an outer peripheral edge or an inner peripheral edge thereof, **characterised in that** a rotational locus region (S1 to S5) is formed when the notches (20e) and the respective through-holes (20a to 20d) of the disk plate (5) are caused to rotate through one revolution, and covers all regions of a slide locus (S16) of the friction member (16) on the disk plate (5), and all through-holes (20a to 20d) of the disk plate (5) have the same circular shape.

2. Disk braking device according to claim 1, wherein the through-holes (20a to 20d) are formed at predetermined circumferential intervals on concentric circles (C1 to C4), which are centered on the center (P) of rotation of the disk plate (5).

3. Disk braking device according to claim 1 or 2, wherein the notches (20e) are arranged so that any one of the radial lines (D) passes through the notch (20e).

4. Disk braking device according to one of the claims 1 to 3, wherein the through-holes (20a to 20d) are arranged so that through-hole connecting lines (w) connecting the adjacent through-holes (20a to 20d) together are zigzag along a circumferential direction of the disk plate (5) and the notches (20e) are formed in a manner to be directed toward those portions of the through-hole connecting lines (w), which are recessed toward a center (P) thereof, from an outer peripheral edge of the disk plate (5).

5. Disk braking device according to one of the claims 1 to 4, wherein the disk plate (5) is formed to be annular, the plurality of through-holes (20a to 20d) are arranged so that through-hole connecting lines (w) connecting the adjacent through-holes (20a to 20d) together are zigzag along a circumferential direction of the disk plate (5), and the notches (20e) are formed in a manner to be directed toward those portions of the through-hole connecting lines (w), which are convex toward an outer peripheral edge thereof, from an inner peripheral edge of the disk plate (w).

6. Disk braking device according to one of the claims 1 to 5, wherein the disk plate (5) comprises the plurality of through-holes (20a to 20d) formed at circumferential intervals on a plurality of concentric circles (C1 to C4), wherein the rotational locus regions (S1 to S4) of the through-holes (20a to 20d) positioned on the respective concentric circles (C1 to C4) overlap rotational locus regions of the through-holes (20a to 20d) positioned on a radially adjacent concentric circle (C1 to C4), and rotational locus regions (S4) of the through-holes (20d) positioned on an outer end concentric circle (C4), which is positioned radially outermost, overlap rotational locus regions (S5) of the notches (20e).

7. Disk braking device according to one of the claims 1 to 6, wherein the disk plate (5) comprises the plurality of through-holes (20a to 20d) formed at circumferential intervals on a plurality of concentric circles (C1 to C4), wherein, when the notches (20e) and the through-holes (20a to 20d) positioned on the respective concentric circles (C1 to C4) are moved onto a virtual straight line (A) passing through a center (P) of the disk plate (5) and the friction member (16) is moved onto the virtual straight line (A), the notches (20e) and the through-holes (20a to 20d) form a virtual slit (B) radially crossing a projected plane of the friction member (16) onto the disk plate (5).

8. Motorcycle comprising the disk braking device according to one of the claims 1 to 7.

## Patentansprüche

1. Scheiben-Bremsvorrichtung, in der eine Scheibe (5), fixiert an einem Rad, zwischen Reibelementen aufgenommen ist, wobei die Scheibe (5) eine Mehrzahl von Durchgangs-Löchern (20a bis 20d) umfasst, die jeweils angeordnet sind, sodass jedes Durchgangsloch auf einer individuellen radialen Linie (D) vorgesehen ist, die durch ein Zentrum (P) der Scheibe (5) hindurchtritt, eine Randkante der Scheibe (5) ist mit Nuten (20e) an vorgegebenen Umfangs-Intervallen vorgesehen, wobei nur eines von diesen Durchgangs-Löchern (20a bis 20d) auf einer radialen Linie (D) der Brems-Scheibe (20) ausgebildet ist, die einen Wärme-Leit-Pfad bildet, durch den Reibungswärme, erzeugt in den Durchgangs-Loch-Abschnitten der Brems-Scheibe (20), zu einer äußeren Randkante oder einer inneren Randkante derselben geleitet ist, **dadurch gekennzeichnet, dass** ein Dreh-Orts-Bereich (S1 bis S5) gebildet ist, wenn die Nuten (20e) und die jeweiligen Durchgangs-Löcher (20a bis 20d) der Scheibe (5) eine Umdrehung ausführen, und alle Bereiche der Gleit-Orte (S16) der Reibelemente (16) auf der Scheibe (5) abdeckt, und alle Durchgangs-Löcher (20a bis 20d) der Scheibe haben die gleiche Kreisform.

2. Scheiben-Bremsvorrichtung gemäß Anspruch 1, wobei die Durchgangs-Löcher (20a bis 20d) an vorgegebenen Umfangs-Intervallen auf konzentrischen Kreisen (C1 bis C4) ausgebildet sind, die um das Zentrum (P) der Drehung der Scheibe (5) zentriert sind.

3. Scheiben-Bremsvorrichtung gemäß Anspruch 1 oder 2, wobei die Nuten (20e) angeordnet sind, so dass irgendeine von den radialen Linien (D) durch die Nut (20e) durchtritt.

4. Scheiben-Bremsvorrichtung gemäß einem der Ansprüche 1 bis 3, wobei die Durchgangs-Löcher (20a bis 20d) angeordnet sind, sodass Durchgangs-Loch-Verbindungslinien (w), welche die benachbarten Durchgangs-Löcher (20a bis 20d) miteinander verbinden zick-zack entlang einer Umfangs-Richtung der Scheibe (5) sind und die Nuten (20e) in einer Weise ausgebildet sind, um zu diesen Abschnitten der Durchgangs-Loch-Verbindungslinien (w) gerichtet zu sein, welche zu einen Zentrum (P) derselben von einer äußeren Randkante der Scheibe (5) ausgenommen, sind.

5. Scheiben-Bremsvorrichtung gemäß einem der Ansprüche 1 bis 4, wobei die Scheibe (5) ausgebildet ist, um ringförmig zu sein, die Mehrzahl von Durchgangs-Löchern (20a bis 20d) sind angeordnet, sodass Durchgangs-Loch-Verbindungslinien (w), welche die benachbarten Durchgangs-Löcher (20a bis 20d) miteinander verbinden zickzack entlang einer Umfangsrichtung der Scheibe (5) sind, und die Nuten (20e) sind in einer Weise ausgebildet, um zu diesen Abschnitten der Durchgangs-Loch-Verbindungslinien (w) gerichtet zu sein, die konvex zu einer äußeren Randkante derselben von einer inneren Randkante der Scheibe (w) sind.

6. Scheiben-Bremsvorrichtung gemäß einem der Ansprüche 1 bis 5, wobei die Scheibe (5) eine Mehrzahl von Durchgangs-Löchern (20a bis 20d) umfasst, die in Umfangs-Intervallen an einer Mehrzahl von konzentrischen Kreisen (C1 bis C4) ausgebildet sind, wobei die Dreh-Orts-Bereich (S1 bis S4) der Durchgangs-Löcher (20a bis 20d), positioniert an den jeweiligen konzentrischen Kreisen (C1 bis C4), Dreh-Orts-Bereich der Durchgangs-Löcher (20a bis 20d), positioniert an radial benachbarten konzentrischen Kreisen (C1 bis C4), überlappen, und Dreh-Orts-Bereich S4 der Durchgangs-Löcher (20d), positioniert am außenkonzentrischen Kreis (C4) der am weitesten radial außen positioniert ist, Dreh-Orts-Bereich (S5) der Nuten (20e) überlappt.

7. Scheiben-Bremsvorrichtung gemäß einem der Ansprüche 1 bis 6, wobei die Scheibe (5) eine Mehrzahl von Durchgangs-Löchern (20a bis 20d) umfasst, ausgebildet an Umfangs-Intervallen auf einer Mehrzahl von konzentrischen Kreisen (C1 bis C4), wobei, wenn die Nuten (20e) und die Durchgangs-Löcher (20a bis 20d), positioniert auf den jeweiligen konzentrischen Kreisen (C1 bis C4), auf virtuell Gradlinien (A) bewegt werden, die sich durch ein Zentrum (P) der Scheibe (5) erstrecken, und das Reibelement (16) auf der virtuellen geraden Linie (A) bewegt ist, bilden die Nuten (20e) und die Durchgangs-Löcher (20a bis 20d) einen virtuellen Schlitz (B), der eine Projektions-Ebene des Reibelements (6) auf die Scheibe (5) radial kreuzt.

8. Motorrad, das eine Scheiben-Bremsvorrichtung gemäß einem der Ansprüche 1 bis 7 umfasst.

## Revendications

1. Frein à disque dans lequel un plateau de disque (5), fixé à une roue, est intercalé entre des éléments de frottement, le plateau de disque (5) comprenant une pluralité de trous traversants (20a à 20d) qui sont respectivement agencés de telle sorte que chaque trou traversant est placé sur une droite radiale individuelle (D) traversant le centre (P) du plateau de disque (5), la bordure périphérique du plateau de disque (5) étant pourvue d'encoches (20e) à des intervalles circonférentiels prédéterminés, un seul desdits trous traversants (20a à 20d) étant formé sur une droite radiale (D) du disque de freinage (20) en formant un trajet de conduction de la chaleur au travers duquel la chaleur de frottement, générée dans les parties de trous traversants du disque de frein (20), est conduite vers sa bordure périphérique externe ou sa bordure périphérique interne, **caractérisé en ce que** la zone du lieu de rotation (S1 à S5) est formée lorsque les encoches (20e) et les trous traversants respectifs (20a à 20d) du plateau de disque (5) sont amenés à tourner sur une révolution, et elle recouvre toutes les zones d'un lieu de glissement (S16) de l'élément de frottement (16) sur le plateau de disque (5), et tous les trous traversants (20a à 20d) du plateau de disque (5) présentent la même forme circulaire.

2. Frein à disque selon la revendication 1, dans lequel les trous traversants (20a à 20d) sont formés à des intervalles circonférentiels prédéterminés situés sur des cercles concentriques (C1 à C4) qui sont centrés sur le centre (P) de rotation du plateau de disque (5).

3. Frein à disque selon la revendication 1 ou la revendication 2, dans lequel les encoches (20e) sont agencées de telle sorte que l'une quelconque des droites radiales (D) passe au travers de l'encoche (20e).

4. Frein à disque selon l'une des revendications 1 à 3, dans lequel les trous traversants (20a à 20d) sont agencés de telle sorte que les droites de liaison de trous traversants (w) qui relient les trous traversants (20a à 20d) adjacents forment une ligne brisée le long de la direction circonférentielle du plateau de disque (5), et les encoches (20e) sont formées de manière à être dirigées vers ces parties des droites de liaison de trous traversants (w) qui sont en creux vers le centre (P) du plateau de disque (5), depuis le bord périphérique externe de celui-ci.

5. Frein à disque selon l'une des revendications 1 à 4, dans lequel le plateau de disque (5) est façonné pour être annulaire, la pluralité de trous traversants (20a à 20d) est agencée de telle sorte que les droites de liaison de trous traversants (w) qui relient les trous traversants (20a à 20d) adjacents forment une ligne brisée le long de la direction circonférentielle du plateau de disque (5), et les encoches (20e) sont formées de façon à être dirigées vers les parties des droites de liaison de trous traversants (w) qui sont convexes vers le bord périphérique externe du plateau de disque (5), depuis le bord périphérique interne de celui-ci.

6. Frein à disque selon l'une des revendications 1 à 5, dans lequel le plateau de disque (5) comprend la pluralité de trous traversants (20a à 20d) formés à des intervalles circonférentiels sur une pluralité de cercles concentriques (C1 à C4), les zones de lieu de rotation (S1 à S4) des trous traversants (20a à 20d) étant positionnées sur les cercles concentriques (C1 à C4) respectifs chevauchant les zones des lieux de rotation des trous traversants (20a à 20d) placés sur un cercle concentrique (C1 à C4) radialement adjacent, et les zones de lieu de rotation (S4) des trous traversants (20d) étant positionnées sur le cercle concentrique (C4) à l'extrémité externe qui est positionné au plus loin radialement, chevauchant les zones de lieu de rotation (S5) des encoches (20e).

7. Frein à disque selon l'une des revendications 1 à 6, dans lequel le plateau de disque (5) comprend la pluralité de trous traversants (20a à 20d) formés à des intervalles circonférentiels sur une pluralité de cercles concentriques (C1 à C4), où, lorsque les encoches (20e) et les trous traversants (20a à 20d), positionnés sur les cercles concentriques (C1 à C4) respectifs, sont déplacés sur une ligne droite virtuelle (A) traversant le centre (P) du plateau de disque (5), et que l'élément de frottement (16) est déplacé sur la ligne droite virtuelle (A), les encoches (20e) et les trous traversants (20a à 20d) forment une fente virtuelle (B) croisant radialement un plan en projection de l'élément de frottement (16) sur le plateau de disque (5).

8. Motocyclette comprenant le frein à disque conforme à l'une des revendications 1 à 7.
